# FASCICULE DE BREVET EUROPEEN

(11) **EP 2 008 986 B1**
(45) Date de publication et mention de la délivrance du brevet: **20.08.2014**
(21) Numéro de dépôt: 08104446.3
(22) Date de dépôt: 17.06.2008
(51) Int. Cl.: C04B 38/00, C04B 35/58, C04B 35/645, C04B 35/575, H01T 13/38, H01T 13/39, C04B 35/593, C04B 35/597

(54) **Procédé de préparation d'une céramique frittée**
Verfahren zur Herstellung einer Sinterkeramik
Method of preparing a sintered ceramic

(30) Priorité: 18.06.2007 FR 0755820
(43) Date de publication de la demande: 31.12.2008
(73) Titulaire: Meggitt (France), 75011 Paris (FR)
(72) Inventeur: Jankowiak, Aurélien, 30200 Saint Etienne des Sorts (FR); Blanchart, Philippe, 87100 Limoges (FR); Trenit, Frédéric, 16470 Saint Michel (FR)
(74) Mandataire: Domenego, Bertrand

(56) Documents cités:
- EP-A- 1 770 837
- EP-A2- 0 761 279
- US-A- 4 172 107
- US-A- 5 028 346
- US-A1- 2002 076 560
- US-A1- 2005 084 717

## Description

L'invention concerne le domaine des bougies d'allumage, et plus particulièrement celui des céramiques semi-conductrices utilisées dans la fabrication de bougies du type haute énergie basse tension.

On rappelle que les bougies d'allumage, notamment pour turbines à gaz et moteurs à réaction, peuvent relever de deux types :
- les bougies du type haute énergie haute tension (HEHT), dont la tension de fonctionnement est de l'ordre de 20 kV ;
- les bougies du type haute énergie basse tension (HEBT) dont la tension de fonctionnement est de l'ordre de 2 à 3 kV ; Elles sont capables de fournir une énergie de quelques 1/10 de Joule à quelques Joules.

Les bougies HEBT comportent un matériau tel qu'un cermet entre leurs électrodes, de manière à ce que l'application d'une tension suffisante entre ces électrodes conduise au passage d'une étincelle.

Le comportement du matériau pendant les différentes phases de l'étincelle a été analysé comme étant le suivant.

D'abord, le cermet est actif pendant la phase d'ionisation qui correspond à une accumulation de charges à la surface du matériau. Ensuite vient la phase d'amorçage qui, elle, correspond à une zone intermédiaire pendant laquelle il y a propagation de proche en proche de micro-arcs à ladite surface. Enfin, vient la phase d'étincelle pendant laquelle le semi-conducteur est inactif mais subit d'importantes contraintes mécaniques et thermiques engendrées par le passage de l'étincelle.

On notera que dans le langage courant des fabricants de bougies d'allumage, ce matériau est, parfois, qualifié de « semi-conducteur ». Cet usage ne correspond, cependant, pas vraiment à la réalité. En effet, lors de la phase d'amorçage, le matériau devient conducteur à sa surface, mais pas dans l'ensemble de son volume.

Les avantages des bougies HEBT sont, d'une part, liés à leur fonctionnement peu dépendant des conditions régnant dans la chambre de combustion (ré-allumage à forte pression), et, d'autre part, à la chaîne d'allumage de moindre importance qu'il suffit de mettre en place pour assurer leur fonctionnement. Ce sont ces avantages qui ont conduit au développement de matériaux céramiques à base de carbure de silicium décrits en particulier dans les documents US-A-5 028 346 et FR-A-2 346 881. Ces matériaux renferment également une phase isolante à base, par exemple, de nitrure de silicium et d'oxynitrure de silicium modifié, ou de silice, d'alumine et d'oxyde d'alcalino-terreux.

Cependant, si ces systèmes n'ont pas été généralisés sur les moteurs, c'est que la durée de vie d'une bougie comportant ces matériaux devient très réduite dans le cas d'une utilisation dans des conditions sévères, c'est à dire à fortes pressions et hautes températures combinées avec des attaques chimiques liées au type de carburant utilisé.

Dans les bougies HEHT, c'est l'usure des électrodes qui limite la durée de vie des bougies alors que dans les bougies HEBT, l'usure de la céramique intervient sensiblement avant l'usure des électrodes, et c'est elle qui limite la durée de vie.

Le but de l'invention est d'augmenter la durée de vie, et donc la fiabilité, des bougies du type HEBT.

A cet effet, l'invention a pour objet un procédé de préparation d'une céramique, selon lequel :
- on mélange dans un récipient renfermant un liquide, 50% à 75% en masse d'un composé destiné à former une phase conductrice, et 25% à 50% en masse d'un ou plusieurs matériaux permettant la formation de phases isolantes composées de nitrure de silicium et d'oxynitrure de silicium modifié après un traitement thermique conduisant à un frittage de la céramique ;
- on effectue des opérations de broyage, de séchage et de tamisage de ce mélange ;
- on effectue un pressage de ce mélange ;
- et on effectue un frittage de ce mélange de manière à obtenir une céramique de porosité comprise entre 0 et 30%,
caractérisé en ce que le frittage est effectué sous une pression d'au moins 50 bars d'un gaz non réactif vis-à-vis des constituants du mélange.

De préférence, ledit gaz non réactif est de l'azote.

De préférence, la pression est d'au moins 80 bars.

La phase conductrice peut être choisie parmi le SiC et le MoSi₂ et leurs mélanges.

De préférence, on réalise le mélange de composés et le frittage de manière à obtenir une teneur en nitrure de silicium libre de 15 à 22% dans la céramique finale.

La porosité de la céramique obtenue est de préférence comprise entre 0% et 15%.

On peut ajouter au mélange 3% à 10% en masse, par rapport à la masse totale des composés destinés à former les phases conductrice et isolante, d'un ou plusieurs composés organiques liants et/ou plastifiants, et on effectue après le pressage et avant le frittage une opération de déliantage.

On peut alors effectuer le broyage en deux étapes ; l'addition du plastifiant a lieu entre les deux étapes, et la deuxième étape de broyage est moins énergique que la première étape.

Lesdits matériaux permettant la formation de phases isolantes peuvent être : Si₃N₄, Al₂O₃, MgO, CaO et des oxydes de terre rares tels que l'Y₂O₃.

L'invention a également pour objet une céramique frittée, caractérisée en ce qu'elle est obtenue par le procédé précédent.

La phase conductrice peut être du SiC ou du MoSi₂ ou leurs mélanges.

La phase isolante peut être composée de nitrure de silicium et d'oxynitrures de silicium modifiés de type M Si M'ON ou M SiM'M"ON avec :
- M choisi parmi Ca, Mg, Sr,
- M' et M"choisis parmi Al, Y, Pr, Nd, La.

Dans une bougie d'allumage du type à haute énergie basse tension comportant une céramique entre ses électrodes, on peut utiliser une céramique du type précédent.

Comme on l'aura compris, on utilise des phases isolantes composées de nitrure de silicium et d'oxynitrure de silicium modifié obtenues par un frittage à pression gazeuse élevée (procédé dit « Gas Pressure Sintering » ou GPS) afin d'assurer une bonne densité et une bonne stabilité des matériaux obtenus. Les phases composant les céramiques ont de très bonnes propriétés mécaniques et thermomécaniques. En outre leur résistivité électrique très élevée, combinée à leur forte rigidité diélectrique, les rend utilisables dans les domaines d'applications visés.

Ainsi, l'élément céramique situé entre les électrodes de la bougie peut résister aux importantes sollicitations qu'il subit pendant la phase d'ionisation (forte pression, haute température, présence d'agents chimiques) et aussi pendant la phase d'étincelle où le semi-conducteur est passif mais subit des chocs thermiques et mécaniques. Ceux-ci conduisent à un déchaussement des particules de phase conductrice situées au voisinage de la surface inter-électrodes, dans le cas des bougies HEBT utilisant des céramiques connues dans l'art antérieur dont les matériaux de départ utilisés pour les fabriquer sont de natures relativement analogues à ceux de la présente invention, mais qui n'ont pas été produites par utilisation du procédé GPS. Le résultat du procédé de l'invention est l'obtention de céramiques se distinguant de l'art antérieur par une microstructure mieux contrôlée, moins susceptible de présenter des défauts, et où le nitrure de Si a généralement réagi de manière plus poussée avec les autres composés formant la phase isolante.

L'invention sera mieux comprise à la lecture de la description qui suit, donnée en référence à la figure unique annexée suivante qui montre l'usure moyenne en mm au cours du temps (exprimé en nombre de cycles de démarrage: 30 s ON - 30 s OFF sous goutte à goutte de kérosène) d'une céramique de référence et d'une céramique de l'invention lorsqu'elles sont utilisées dans une bougie HEBT lors d'un essai sous goutte à goutte de kérosène à une fréquence de 2 Hz avec une énergie de 3,3 J stockée.

Comme exemples privilégiés de phases conductrices utilisables dans le cadre de l'invention, on peut citer SiC et MoSi₂, qui montrent d'excellentes propriétés thermomécaniques. SiC présente une excellente résistance à l'oxydation, notamment aux températures de l'ordre de 650°C.

On peut remarquer que le MoSi₂ tend à s'oxyder fortement entre 300 °C et 700°C pour former de la silice et du MoO₃ dont le volume de maille est très supérieur à celui du MoSi₂, ce qui conduit à la longue à une fissuration des pièces. Mais aux températures très élevées (1 100°C et davantage), ce phénomène ne se produit pas, car il se forme une couche de silice protectrice qui évite la formation brutale de MoO₃.

Concernant la phase isolante elle est composée d'un ou plusieurs oxynitrures de silicium modifiés obtenus lors du frittage, à partir, par exemple, de Si₃N₄, de Y₂O₃ et de MgO, et de Si₃N₄ libre représentant une partie du Si₃N₄ initialement présent à l'état pur dans le mélange, et qui n'a pas réagi avec les oxydes lors du frittage par le procédé GPS.

De manière générale, ces oxynitrures de silicium modifiés répondent à la formule générale M Si M'ON ou M Si M' M"ON avec :
* M choisi parmi Ca, Mg, Sr
* M' et M" choisis parmi Al, Y, Pr, Nd, La.

Les composés qui ont été cités permettent la formation de phases assurant une densification optimale et procurant à la céramique une grande dureté et de bonnes propriétés mécaniques et thermomécaniques. La porosité de la céramique obtenue ne doit pas dépasser 30%, de préférence 15%, afin d'assurer une bonne résistance mécanique à la pièce et limiter les risques de perforation de cette dernière par l'arc électrique.

Les proportions respectives des différents composés essentiels sont, en pourcentages en masse rapportés au total des matières solides subsistant dans la céramique finale :
- 50% à 75% pour les matériaux constituant la phase conductrice ;
- 25% à 50% pour les matériaux constituant la phase isolante qui sont un ou des oxynitrures de Si modifiés et du nitrure de Si libre, donc resté à l'état non combiné ; de préférence, ce nitrure de Si libre représente entre 15 et 22% de la masse totale des composés constituant les phases isolante et conductrice de la céramique.

Des composés permettant de faciliter l'obtention d'une céramique ayant la morphologie désirée, mais non destinés à subsister en tant que tels dans le produit final, peuvent être utilisés lors de la préparation. Notamment on peut utiliser des dispersants, des liants et des plastifiants. Les dispersants peuvent être présents à raison de jusqu'à 1% en masse par rapport aux deux classes de composés constituant les phases conductrice et isolante, et les plastifiants et liants à raison, par exemple, de 3% à 10% en masse par rapport aux composés constituant les phases conductrice et isolante. Les liants et plastifiants ne doivent pas contenir d'alcalins ou d'alcalino-terreux, et doivent être purement organiques afin de ne pas polluer la composition de base.

Comme exemple non limitatif de procédé de préparation de céramiques selon l'invention, on peut citer le mode opératoire suivant.

Au cours d'une première étape, on mélange des composés mis sous forme de poudres, de préférence en deux sous-étapes.

Dans la première sous-étape, on verse dans une jarre 35 g de Si₃N₄ alpha, 3 g de Al₂O₃ 5 g de Y₂O₃ et 1 g de MgO. La jarre contient 10 médias de broyage d'un diamètre de 13mm environ. On ajoute dans la jarre 22 g d'eau osmosée, 0.3g de DARVAN C ou de A88 (5r,6r-2,4-bis-(4-hydroxy-3-methoxybenzyl)-1,5-dibenzyl-oxo-6-hydroxy-1,2,4-triazalycloheptane) ou de DOLAPIX PC33. Ces composés sont des dispersants. On pourrait utiliser d'autres milieux liquides que l'eau, par exemple de l'alcool, mais dans ce dernier cas il faudrait utiliser d'autres dispersants (par exemple du BEYCOS-TAT C213 qui est un ester phosphorique), ceux cités précédemment n'étant pas compatibles avec l'alcool.

On effectue ensuite un broyage du mélange à relativement grande vitesse, en plaçant la jarre dans un planétaire pendant 45 minutes. Le but est de casser les éventuels agglomérats de poudre et de bien disperser la matrice. L'utilisation d'un broyeur à boulet serait possible, mais un mélange homogène serait plus long à obtenir (4 heures environ).

Dans une deuxième sous-étape, on ajoute dans la jarre 56 g de carbure de silicium SiC de granulométrie moyenne 10 µm et une solution contenant 27 g d'eau osmosée, 7 g de PEG600 et 1 g d'ESACOL HS26. Le PEG 600 est un polyéthylène glycol. Ce composé est un plastifiant qui facilite l'étape de pressage ultérieure. L'ESACOL HS26 est un liant à base de gomme de guar. La jarre est ensuite replacée dans le planétaire et on effectue un broyage à vitesse modérée pendant 20 minutes pour ne pas détériorer les plastifiants. Un broyage trop énergique briserait les chaînes polymères qui confèrent aux produits leurs propriétés élastiques. C'est également pour cette raison que les plastifiants ne sont introduits dans le mélange qu'après la première étape de broyage puisque celle-ci est énergique.

Le mélange obtenu est ensuite séché dans une étuve à 70°C pendant 24 heures pour éliminer l'eau du mélange.

La galette obtenue est broyée à l'aide d'un mortier. La poudre obtenue est tamisée avec un tamis de 500 µm.

La poudre qui a traversé le tamis subit une opération de pressage en deux étapes : un pressage uniaxial dans un moule de 13 mm de diamètre pour obtenir une préforme, puis un pressage isostatique dans une enceinte à 2 000 bars.

Puis les préformes sont déliantées sous argon pur ou sous vide à une température maximale de 600°C pendant 3 jours, afin de brûler les additifs organiques présents dans les préformes.

Le cycle de déliantage utilisé est le suivant :
- Montée à 0,2°C/min jusqu'à 600°C
- Palier de 5 heures à 600°C
- Descente à 10°C/min.

Enfin, les préformes déliantées sont placées dans un creuset en graphite, pour y être frittées entre 1 650 et 1 950°C pendant une durée allant de 30 minutes à 2 heures sous atmosphère contrôlée et sous pression d'argon ou d'azote, de préférence sous azote. Cette pression est d'au moins 50 bars, de préférence au moins 80 bars, avec une limite supérieure imposée uniquement par la construction de l'installation. Usuellement la pression de travail est de 80 à 120 bars. On utilise donc, selon l'invention, le procédé GPS de frittage dans une atmosphère sous pression.

Ce procédé consiste à réaliser le frittage en présence d'un gaz sous pression non réactif vis-à-vis des composés mis en jeu, d'où le choix privilégié d'argon ou d'azote. Par rapport à un frittage réalisé classiquement sous faible pression de gaz, le procédé GPS permet de réaliser le frittage à haute température pendant une longue durée, en évitant une décomposition de la céramique en cours de frittage. Spécifiquement dans le cas du frittage de composés de nitrure de Si et d'oxynitrure de Si tels que ceux utilisés ou formés lors de la fabrication des céramiques selon l'invention, l'utilisation d'une pression élevée d'azote permet d'éviter plus assurément leur décomposition. L'utilisation d'azote sera donc généralement préférée à celle de l'argon (ou d'autres gaz inertes) dans la mise en oeuvre de l'invention.

Cette utilisation du procédé GPS est effectuée en plaçant un lit de poudre de nitrure de Si dans le creuset et autour des préformes. Le nitrure de Si pourrait être remplacé notamment par un autre nitrure faiblement réactif vis-à-vis du Si₃N₄ des préformes, tel que BN ou AIN. Le lit de poudre permet de séparer les préformes, s'il y en a plusieurs dans le même creuset, et aussi permet une diffusion régulière de l'atmosphère d'azote sous pression. Celle-ci est donc homogène autour des préformes.

Cette technique favorise la réduction de la taille et du nombre des défauts dans la microstructure des matériaux notamment des porosités, ce qui diminue leur fragilité. Les pores du matériau agissent comme des défauts critiques du point de vue électrique en augmentant localement le champ électrique à leur voisinage. De façon générale, grâce à la technique GPS, on obtient un meilleur contrôle de la microstructure et des défauts présents. Une porosité mal contrôlée, ou la présence de macrodéfauts, peut augmenter la possibilité de percement de la céramique en cas de sollicitation électrique dans un environnement extrême.

On augmente ainsi la durée de vie des matériaux en service lorsqu'ils sont soumis à des hautes températures et à des variations rapides de température par une réduction de l'érosion de la surface située entre les électrodes, sous l'effet de l'énergie apportée localement par l'étincelle à haute énergie, notamment en présence de kérosène et sous une pression élevée. Egalement, les propriétés mécaniques et thermomécaniques du matériau sont améliorées, ce qu'on pense pouvoir attribuer notamment à la possibilité d'obtenir une réaction plus poussée du nitrure de Si avec les oxydes formant le restant de phase isolante qui se traduit généralement par une plus faible teneur en nitrure de Si libre de la céramique à l'issue du frittage. De ce point de vue, c'est notamment l'augmentation de la ténacité de la céramique qui est avantageuse, en ce qu'elle diminue l'impact du choc acoustique de l'arc électrique. On atténue donc la fissuration par fatigue et l'érosion de la céramique.

Le cycle de frittage utilisé dans cet exemple est le suivant :
- Montée à 10°C/min jusqu'à 1 800°C
- Palier de 60 min à 1 800°C sous 100 bar de N₂
- Descente à 10°C/min jusqu'à 20°C

On obtient selon l'invention une céramique contenant du SiC, du Si₃N₄ libre et un ou plusieurs des composés suivants : Mg-SiYAION, Mg-SiYON, et Mg-SiAION ou autres, appartenant au diagramme Y₂O₃-Al₂O₃-Si₃N₄, et de porosité totale (ouverte et fermée) égale à 25% au maximum, résultant de la combinaison d'une partie du Si₃N₄ initialement présent avec les oxydes introduits dans le mélange.

Dans l'exemple précis qui vient d'être décrit, la céramique obtenue a la composition et la morphologie suivantes :
- SiC = 56% ;
- Si₃N₄ libre ou modifié = 35% ; dont 20% de Si₃N₄ libre, le restant étant combiné à 1% de MgO, 3% de Al₂O₃ et 5% de Y₂O₃ pour former des oxynitrures de Si modifiés ;
- porosité < 25%.

Il doit être entendu que les détails des modes opératoires pour l'obtention des céramiques selon l'invention peuvent s'écarter des exemples qui ont été décrits. L'essentiel est qu'au final, on obtienne une céramique ayant la composition et les porosités requises. En particulier, il est envisageable de se passer du pressage uniaxial et de n'effectuer qu'un pressage isostatique de la poudre. Mais l'utilisation des deux étapes procure une meilleure homogénéité des pièces en termes de densité. Si on n'utilise qu'un pressage isostatique, il est conseillé d'utiliser des liants et des plastifiants à des teneurs situées dans le haut de la fourchette de 3% à 10% précitée.

La figure unique présente des résultats expérimentaux obtenus lors d'essais sous goutte à goutte de kérosène.

On utilise deux bougies d'allumage. La première est montée avec, entre ses électrodes, une céramique de référence représentative de l'art antérieur selon le document US-A-5 028 346, et renfermant du carbure de silicium, du nitrure de silicium et un oxynitrure de silicium modifié. Elle contient 54% à 65% de SiC, 29% à 40% de nitrure de silicium libre et 8% à 22% d'oxynitrure de silicium modifié. La seconde est montée avec une céramique conforme à l'invention, et préparée selon le procédé décrit dans l'exemple précité.

L'énergie stockée est de 3,3 J, la fréquence des gouttes de kérosène arrivant à la surface de la bougie est 2 Hz. La fréquence des impulsions est de 6 Hz. La tension de claquage des deux bougies est comprise entre 600 V et 900 V.

La figure unique montre la profondeur d'usure moyenne de la céramique par rapport à l'électrode périphérique, (exprimée en mm), en fonction du temps, exprimé en nombre de cycles de démarrage. On voit que l'usure mesurée de la céramique semi-conductrice de l'art antérieur est nettement supérieure à celle mesurée sur la céramique semi-conductrice suivant l'invention, cette dernière étant quasi-nulle même après 400 cycles de démarrage.

## Revendications

1. Procédé de préparation d'une céramique, selon lequel :
- on mélange dans un récipient renfermant un liquide, 50% à 75% en masse d'un composé destiné à former une phase conductrice, et 25% à 50% en masse d'un ou plusieurs matériaux permettant la formation de phases isolantes composées de nitrure de silicium et d'oxynitrure de silicium modifié après un traitement thermique conduisant à un frittage de la céramique ;
- on effectue des opérations de broyage, de séchage et de tamisage de ce mélange ;
- on effectue un pressage de ce mélange ;
- et on effectue un frittage de ce mélange de manière à obtenir une céramique de porosité comprise entre 0 et 30%,
**caractérisé en ce que** le frittage est effectué sous une pression d'au moins 50 bars d'un gaz non réactif vis-à-vis des constituants du mélange.

2. Procédé selon la revendication 1, **caractérisé en ce que** ledit gaz non réactif est de l'azote.

3. Procédé selon la revendication 1 ou 2, **caractérisé en ce que** la pression est d'au moins 80 bars.

4. Procédé selon la revendication 1 ou 2, **caractérisé en ce que** la phase conductrice est choisie parmi le SiC et le MoSi₂ et leurs mélanges.

5. Procédé selon l'une des revendications 1 à 4, **caractérisé en ce qu'**on réalise le mélange de composés et le frittage de manière à obtenir une teneur en nitrure de silicium libre de 15 à 22% dans la céramique finale.

6. Procédé selon l'une des revendications 1 à 5, **caractérisé en ce que** la porosité de la céramique obtenue est comprise entre 0% et 15%.

7. Procédé selon l'une des revendications 1 à 6, **caractérisé en ce qu'**on ajoute au mélange 3% à 10% en masse, par rapport à la masse totale des composés destinés à former les phases conductrice et isolante, d'un ou plusieurs composés organiques liants et/ou plastifiants, et **en ce qu'**on effectue après le pressage et avant le frittage une opération de déliantage.

8. Procédé selon la revendication 7, **caractérisé en ce qu'**on effectue le broyage en deux étapes, **en ce que** l'addition du plastifiant a lieu entre les deux étapes, et **en ce que** la deuxième étape de broyage est moins énergique que la première étape.

9. Procédé selon l'une des revendications 1 à 8, **caractérisé en ce que** lesdits matériaux permettant la formation de phases isolantes sont : Si₃N₄, Al₂O₃, MgO, CaO et des oxydes de terre rares tels que l'Y₂O₃.

## Patentansprüche

1. Verfahren zum Herstellen einer Keramik, wobei:
- in einem Gefäß, das eine Flüssigkeit enthält, 50 Masse-% bis 75 Masse-% einer Verbindung, die vorgesehen ist, um eine leitfähige Phase zu bilden, und 25 Masse-% bis 50 Masse-% eines oder mehrerer Materialien, die das Bilden isolierender Phasen, die aus Siliciumnitrid und modifiziertem Siliciumoxinitrid zusammengesetzt sind, ermöglichen, nach einer Wärmebehandlung, die zu einem Sintern der Keramik führt, miteinander vermischt werden,
- Arbeitsgänge des Mahlens, des Trocknens und des Siebens der Mischung durchgeführt werden,
- ein Pressen der Mischung durchgeführt wird,
- und ein Sintern der Mischung durchgeführt wird, so dass eine Keramik mit einer Porosität zwischen 0% und 30% erhalten wird,
**dadurch gekennzeichnet, dass** das Sintern mit einem Druck von mindestens 50 bar eines gegenüber den Bestandteilen der Mischung nicht-reaktiven Gases durchgeführt wird.

2. Verfahren gemäß Anspruch 1, **dadurch gekennzeichnet, dass** das nicht-reaktive Gas Stickstoff ist.

3. Verfahren gemäß Anspruch 1 oder 2, **dadurch gekennzeichnet, dass** der Druck mindestens 80 bar beträgt.

4. Verfahren gemäß Anspruch 1 oder 2, **dadurch gekennzeichnet, dass** die leitfähige Phase aus SiC und MoSi₂ und deren Mischungen ausgewählt wird.

5. Verfahren gemäß einem der Ansprüche 1 bis 4, **dadurch gekennzeichnet, dass** das Mischen von Verbindungen und das Sintern derart durchgeführt werden, dass in der Endkeramik ein Gehalt an freiem Siliciumnitrid von 15% bis 22% erhalten wird.

6. Verfahren gemäß einem der Ansprüche 1 bis 5, **dadurch gekennzeichnet, dass** die Porosität der erhaltenen Keramik zwischen 0% und 15% beträgt.

7. Verfahren gemäß einem der Ansprüche 1 bis 6, **dadurch gekennzeichnet, dass** der Mischung bezüglich der Gesamtmasse der Verbindungen, die vorgesehen sind, um die leitfähige und die isolierende Phase zu bilden, 3 Masse-% bis 10 Masse-% einer oder mehrerer bindender und/oder plastifizierender organischer Verbindungen hinzugefügt werden, und dass nach dem Pressen und vor dem Sintern ein Entbinderungsvorgang durchgeführt wird.

8. Verfahren gemäß Anspruch 7, **dadurch gekennzeichnet, dass** das Mahlen in zwei Schritten durchgeführt wird, dass das Hinzufügen des Weichmachers zwischen den beiden Schritten erfolgt, und dass der zweite Schritt des Mahlens energieärmer als der erste Schritt ist.

9. Verfahren gemäß einem der Ansprüche 1 bis 8, **dadurch gekennzeichnet, dass** die Materialien, die das Bilden isolierender Phasen zulassen, Si₃N₄, Al₂O₃, MgO, CaO und Oxide seltener Erden, wie zum Beispiel Y₂O₃ sind.

## Claims

1. Process for the preparation of a ceramic wherein:
- 50 % to 75 % by weight of a compound intended to form a conductive phase, and 25 % to 50 % by weight of at least material allowing the formation of insulating phases composed of silicon nitride and modified silicon oxynitride are mixed in a receptacle containing a liquid after a thermal treatment leading to sintering of the ceramic;
- this mixture is subjected to grinding, drying and sieving operations;
- this mixture is pressed;
- and this mixture is sintered so as to obtain a ceramic with a porosity of between 0 and 30 %,
**characterized in that** the sintering is carried out under a pressure of at least 50 bar of a gas which is inert towards the constituents of the mixture.

2. Process according to claim 1, **characterized in that** the said inert gas is nitrogen.

3. Process according to claim 1 or 2, **characterized in that** the pressure is at least 80 bar.

4. Process according to claim 1 or 2, **characterized in that** the conductive phase is selected from SiC and MoSi₂ and mixtures thereof.

5. Process according to one of claims 1 to 4, **characterized in that** the mixture is made of compounds and sintering is carried out so as to obtain a free silicon nitride content of 15 to 22 % in the final ceramic.

6. Process according to one of claims 1 to 5, wherein the porosity of the ceramic obtained is between 0 % and 15 %.

7. Process according to one of claims 1 to 6, wherein 3 % to 10 % by weight, based on the total mass of the compounds intended to form the conductive and insulating phases, of at least one compound selected from the group consisting of binding and plasticizing organic compounds, are added to this mixture and in that after pressing and before sintering a binder-removing operation is carried out.

8. Process according to claim 7, wherein grinding is carried out in two stages, in that the addition of the plasticizer takes place between the two stages, and in that the second grinding stage is less energetic than the first.

9. Process according to one of claims 1to 8, wherein said materials allowing the formation of the insulating phases are: Si₃N₄, Al₂O₃, MgO, CaO and the rare-earth oxides such as Y₂O₃.
